Europäisches Patentamt

European Patent Office

Office européen des brevets

(19)

(11) Veröffentlichungsnummer: **0 090 872**
**B1**

(12) **EUROPÄISCHE PATENTSCHRIFT**

(45) Veröffentlichungstag der Patentschrift:
15.01.86

(21) Anmeldenummer: 82102930.3

(22) Anmeldetag: 06.04.82

(51) Int. Cl.⁴: **G 01 L 23/10, G 01 L 5/14**

(54) Hochdruckaufnehmer.

(43) Veröffentlichungstag der Anmeldung:
12.10.83 Patentblatt 83/41

(45) Bekanntmachung des Hinweises auf die Patenterteilung:
15.01.86 Patentblatt 86/3

(84) Benannte Vertragsstaaten:
AT CH DE FR GB LI SE

(56) Entgegenhaltungen:
CH-A-582 353
DE-C-680 594

(73) Patentinhaber: Kistler Instrumente AG,
Eulachstrasse 22, CH- 8408 Winterthur (CH)

(72) Erfinder: Sonderegger, Hans Conrad, Dipl.- Ing.,
Sonnhaldenstrasse 7, CH- 8413 Neftenbach (CH)
Erfinder: Lutz, Eugen, Brisiweg 26, CH- 8400
Winterthur (CH)

(74) Vertreter: Schmidt, Horst, Dr., Patentanwälte
Pohlmann & Schmidt Siegfriedstrasse 8, D-8000
München 40 (DE)

## Beschreibung

Die Erfindung betrifft einen Hochdruckaufnehmer mit einem Montagekörper zur Befestigung in einer Montagebohrung in einem zu untersuchenden Bauteil, einem mit dem Montagekörper verbundenen Sensorteil mit einer Membranpartie zur Beaufschlagung eines Sensorelementes und einer Einrichtung zur Schaffung einer Abdichtung zwischen Aufnehmer und Montagebohrung.

In der Technik bildet die Messung von Druckverläufen in den Bereichen $0...10^8$ und $0...10^9$ Pa ein Spezialgebiet, das insbesondere die Ballistiker seit Jahrzenten intensiv verfolgen. In der Hydraulik treten bei Einspritzvorgängen an Dieselmotoren Spitzendruckwerte bis $2.10^8$ Pa auf. In neueren Pulsschneidvorgängen treten Hydraulik-Druckspitzen bis gegen $4.10^8$ Pa auf. Darüber hinaus gehende Drücke sind jedoch fast ausschliesslich in der Schiesspulverentwicklung und der Ballistik anzutreffen.

Die Erfindung richtet sich deshalb insbesondere, jedoch nicht ausschliesslich, auf Druckaufnehmer zur Erfassung derartig hoher Drücke. Ein bevorzugtes Anwendungsgebiet stellt daher die ballistische Druckmessung dar, um bei Gewehren und Geschützen den Druckverlauf während des Abschusses des Geschosses zu bestimmen. Solche Messungen sind nötig zu Forschungszwecken bei der Weiterentwicklung von Rohren und Geschossen. Zur Pulverentwicklung werden entsprechende Messungen in sog. Druckbomben durchgefürt. Ein anderes Anwendungsgebiet stellt die Hochdruckmessung in flüssigen Medien dar. In allen Fällen handelt es sich um Vorgänge, die wenige Millisekunden dauern und Druck-Amplituden bis $10^9$ Pa aufweisen.

Seit über 100 Jahren werden solche Messungen mit Hilfe von Kupferstauchelementen durchgeführt, die heute immer noch in der Munitionsabnahme Verwendung finden. Seit etwa 20 Jahren hat sich diese Messtechnik jedoch weitgehend auf die elektronische Messtechnik mit piezoelektrischen Aufnehmern konzentriert. Die Piezomesstechnik hat sich für diese hochbeanspruchten, dynamischen Anwendungen als praktisch einzigartig erwiesen infolge der aussergewöhnlich hohen Auflösung, die gestattet, sowohl den anfänglichen Zündvorgang im Druckbereich von wenigen Pascal wie auch den Hauptbrennvorgang mit Drücken bis zu $10^9$ Pa auf Bruchteile von bars zu verfolgen. Zudem erlaubt der Piezoeffekt als Volumeneffekt in Piezokristallen ein Messen praktisch ohne Deformation, da die verwendeten, relativ gross dimensionierten Quarzkristalle sehr vorteilhafte Elastizitätseigenschaften aufweisen und wesentlich höhere Druckfestigkeiten besitzen als Konstruktionen mit besten Stählen. Die Membranpartien solcher Aufnehmer erfahren deshalb minimale Biegung, wodurch eine hohe Lebensdauer erreicht wird.

Zur druckdichten Befestigung solcher Aufnehmer an einem Druckbehälter wurden die darin einzubringenden Montagebohrungen wie auch die Aufnehmerdimensionen in den letzten Jahren etwas standardisiert, insbesondere nachdem die Nato gewisse Normen und Vorschriften erlassen hat. So haben sich vor allem zwei Arten von Dichtungsanordnungen herauskristallisiert:
    1. Aufnehmer mit Schulterdichtung
    2. Aufnehmer mit Sacklochdichtung
    Die Montagegewinde sind
    in Europa M 10 ausnahmsweise M12
    in USA 3/4 USF
    In Europa werden fast ausschliesslich Aufnehmer mit Schulterdichtung verwendet, während in USA hauptsächlich die Sacklochdichtung bevorzugt wird. Die Nato schreibt Aufnehmer mit Schulterdichtung vor.

Bedingt durch die sehr rasanten Druckstösse mit ungewöhnlich hohen Amplituden spielt die Dichtfrage eine Hauptrolle. Die kleinste Leckspur einer Dichtung ergibt Flammdurchstösse, wodurch der Aufnehmer nach wenigen Schüssen ausglüht und damit unbrauchbar wird. Oft werden geläppte Sitz- oder Dichtflächen gefordert, wozu keine zusätzlichen Dichtmittel in Gestalt von Dichtringen nötig sind. Nach jedem Aufnehmerausbau ist jedoch ein Wachläppen der Sitzflächen notwendig. Vielfach werden deshalb dünne Kupferringe verwendet, die manchmal jedoch schwierig von den Sitzflächen zu entfernen sind. Seit über 10 Jahren haben sich selbstanpassende Stahldichtringe gemäss der DE-C 17 75 646 bewährt, welche einwandfreie Dichtung gewährleisten. Ein Drehmoment von 10 Nm genügt für ein sicheres Festsitzen der Aufnehmer, ohne dass ein Lockern befürchtet werden müsste. Andere Aufnehmer ohne solche Dichtringe verlangen Drehmomente bis zu 60 Nm, was entsprechende Deformationen der Dichtflächen zur Folge hat.

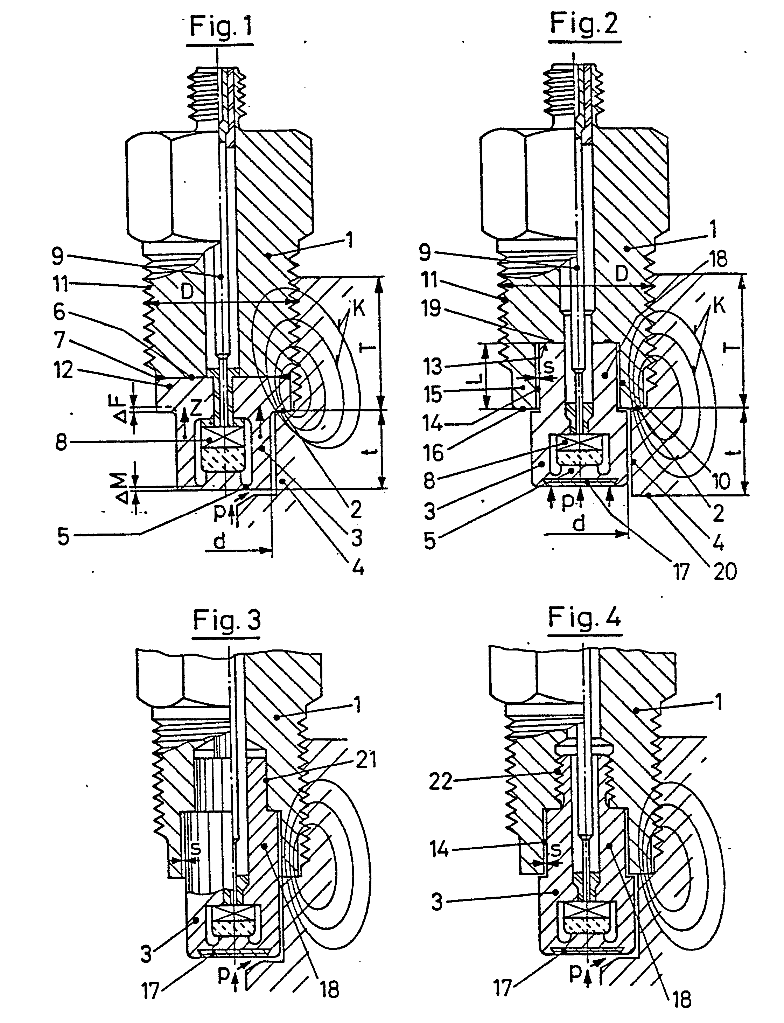

Fig. 1, auf die noch näher eingegangen wird, zeigt einen typischen bekannten piezoelektrischen Hochdruckaufnehmer mit Schulterdichtung. Bedingt durch die hohen Dichtmomente beim Einbau sind bis heute keine Aufnehmer auf dem Markt, deren Empfindlichkeit durch den Montagevorgang nicht beeinflusst wird. Dies rührt daher, dass die während der Montage in den Aufnehmer eingeleiteten Kraftflusslinien durch empfindliche Sensorteile durchgeleitet werden, wodurch auch Deformationen auf die Membranpartien der Aufnehmer übertragen werden. Je nach Mikrogestaltung der Dichtpartie ergibt sich dann für jeden Einbau eine amdere Empfindlichkeit, so dass es oft unmöglich ist, eine befriedigende Mess genauigkeit und Repetierbarkeit zu erreichen. Ein derartiger, dem ersten Teil des Anspruchs 1 entsprechender Druckaufnehmer wird auch in der CH-A-582353 beschrieben. Demgegenüber liegt der Erfindung die Aufgabe zugrunde, einem Aufnehmer der in Rede stehenden Gattung zu schaffen, der praktisch unempfindlich gegen unterschiedliche Dichtdrehmomente ist.

Diese Aufgabe wird erfindungsgemäss dadurch gelöst, dass zwischen Sensorteil und Montagekörper ein Ringspalt vorgesehen ist, der die bei der Abdichtung des Aufnehmers entstehenden Kraftflusslinien aus den Dichtkräften im wesentlichen von dem Sensorteil fernhält.

Dieser Aufnehmer für Schulterdichtung, der gemäss den Unteransprüchen 2 bis 8 weitergebildet ist, hat besondere Vorteile beim Einsatz für ballistische Druckmessungen, da seiner Membranpartie im wesentlichen keine weiteren Aufnehmerbauteile vorgelagert sind.

Der Aufnehmer dient zur Messung schnell sich verändernder Druckabläufe mit hohen Spitzenwerten und zeichnet sich sowohl durch eine hohe Konstanzseiner Ansprechempfindlichkeit als auch durch eine lange Lebensdauer aus, da die empfindliche Membranpartie durch die Dichtkräfte nicht oder nur in kaum nennenswertem Umfang belastet wird. Die Empfindlichkeit des Aufnehmers wird weder durch die Höhe des Anzugsmomentes beim Einschrauben des Aufnehmers in die Montagebohrung noch durch die elastischen Randbedingungen der Montagebohrung noch durch Alterungseffekte beeinflusst. Damit wird sichergestellt, dass unabhängig von den jeweiligen individuellen Einbauverhältnissen sowohl die Messgenauigkeit selbst als auch deren Reproduzierbarkeit unverändert bleiben.

Ausführungsformen der Erfindung wie auch einer bekannten Bauart werden anhand der Zeichnung nachfolgend näher erläutert. Es zeigen in geschnittener Ansicht:

Fig. 1 einem Hochdruckaufnehmer mit Schulterdichtung bekannter Bauart

Fig. 2 einen erfindungsgemässen Hochdruckaufnehmer mit Schulterdichtung

Fig. 3 die Frontpartie eines erfindungsgemässen Hochdruckaufnehmers als Variante zu Fig. 2

Fig. 4 die Frontpartie eines erfindungsgemässen Hochdruckaufnehmers als weitere Variante zu Fig. 2

Fig. 5 Teil eines erfindungsgemässen Hochdruckaufnehmers mit Schulterdichtung und Stahldichtringen

Die im folgenden verwendeten Begriffe "oben" und "unten" beziehen sich auf die Lage der Aufnehmerbauteile, wie sie in der Zeichnung dargestellt ist.

Fig. 1 zeigt einen bekannten Hochdruckaufnehmer mit Schulterdichtung. Wie dargestellt, umfasst der Aufnehmer im wesentlichen zwei Hauptteile, nämlich ein Sensorteil 3 und einen Montagekörper 1. Am oberen Bereich des Sensorteils 3 ist ein Dichtungsflansch 12 ausgebildet. Der Aufnehmer ist in einer Montagebohrung 4 im zu untersuchenden Bauteil angeordnet, die sich aus einem unteren Bohrungsabschnitt t mit kleinerem Durchmesser d und einem oberen Bohrungsabschnitt T mit grösserem Durchmesser D zusammensetzt, wobei die Bohrungsabschnitte konzentrisch zueinander liegen. Am Uebergang von einem Bohrungsabschnitt zum andern ist eine Absatz- oder Schulterfläche 2 ausgebildet, mit der der Dichtungsflansch 12 am Sensorteil 3 in dichtender Berührung kommt und die exakt rechtwinklig zur Mittellängsachse der Bohrungsabschnitte T, t liegt. Wie dargestellt, trägt der obere Bohrungsabschnitt T ein Innengewinde, in das ein Aussengewinde 11 am Montagekörper 1 des Aufnehmers eingeschraubt werden kann. Wegen der geforderten hohen Genauigkeit der vorzunehmenden Bohr-, Ansenk-, Flächenläpp- und Gewindeschneidarbeiten werden die diesbezüglichen Spezialwerkzeuge vom Aufnehmerhersteller mitgeliefert.

In einer Aussparung im Sensorteil 3 ist, wie dargestellt, ein Sensorelement 8 angeordnet, bei dem es sich vorzugsweise um ein oder mehrere geeignete Piezokristalle handelt, deren elektrische Ladungen über eine durch den Montagekörper 1 geführte Signalleitung 9 nach aussen abgeführt werden. Die freie untere Stirnseite des Aufnehmers wird teilweise durch eine innen verdickte Membranpartie 5 gebildet, die das durch den Mediendruck p erzeugte Drucksignal als Kraft auf das Sensorelement 8 überträgt und vorzugsweise mit dem Sensorteil 3 aus einem Stück gefertigt ist. Das Sensorteil 3 selbst ist mit seiner dem Montagekörper 1 zugewandten oberen Anlagefläche 6 an diesem, wie bei 7 angedeutet, angeschweisst. Bei der bekannten Aufnehmerbauart wirkt der Mediumdruck p sowohl auf die Membranpartie 5 als auch auf die freie Mantelfläche des Sensorteiles 3 bis zu dem Abdichtungsbereich zwischen Dichtflansch 12 und Absatzfläche 2.

Die Druckkrafttransformation wird somit in einem äusserst komplexen Gebilde durchgeführt. Die notwendige Anpresskraft des Dichtflansches 12 gegen die Absatzfläche 2 der Montagebohrung wird beim Einschrauben des Montagekörpers 1 in den Bohrungsabschnitt T erbracht. Dazu sind Dichtdrehmomente von 30... 60 Nm notwendig. Entsprechend diesen sehr hohen Vorspannkräften entstehen Kraftflusslinien K, wie angedeutet, die sich auch auf empfindliche Sensorteile erstrecken. Der Dichtflansch 12 des Sensorteils 3 wird durch die hohe Vorspannung um einen Betrag $\Delta F$ verkürzt, was eine ringförmig verteilte Kraft Z hervorruft. Diese wiederum bewirken eine Verschiebung der Membraneinspannpartie um $\Delta M$, was sich in einer Aenderung der Vorspannung und dadurch auch der Empfindlichkeit des Aufnehmers äussert. Der Mediumdruck p erzwingt eine Aenderung der statischen Kraftflusslinien K, die nochmals eine Rückwirkung auf die Aufnehmerempfindlichkeit hat. Einen weiteren wesentlichen Einfluss auf die Membranpartie hat die thermische Komponente eines Gasstosses, die zusätzliche Verspannungen der Membranpartie 5 ergibt, die dynamische Fehler der Messung zur Folge haben.

Der erfindungsgemäss aufgebaute Hochdruckaufnehmer mit Schulterdichtung, der frei von Dicht-, Anzugs- und Drehmomenteinflüssen ist, ist in Fig. 2 gezeigt. Durch die Schulterdichtung wird dabei der Vorteil erzielt, dass die Membranpartie 5 des Aufnehmers bündig zu der Messraumoberfläche 20 bzw. einer druckzuführenden Zubringerbohrung (vergl. Fig. 1) angeordnet werden kann.

Der Aufnehmer nach Fig. 2 kann gleiche Einbaumasse D, d wie der vorbeschriebene bekannte Aufnehmer haben. Die Grundtiefe des oberen Bohrungsabschnittes T bis zur Absatzfläche 2 sowie die Tiefe des unteren Bohrungsabschnittes t der Montagebohrung 4 liegen im Bereich der bekannten Grenzwerte. Erfindungsgemäss ist der Sensorteil 3 so zu dem Montagekörper 1 angeordnet, dass die Kraftflusslinien K als Folge des druckdichten Einschraubens des Montagekörpers 1 in die Montagebohrung durch einen ringförmigen isolierenden Ringspalt 14 gegenüber dem Sensorteil 3 getrennt sind. Der Sensorteil 3 kann damit weitgehend freihängend in der Messraumbohrung angeordnet werden. Wie dargestellt, ist die dem Montagekörper 1 zugewandte Abstützfläche 13 des Sensorteiles 3 anders als bei der bekannten Aufnehmerbauart gegenüber einer Schulterabdichtungsfläche 16 am Montagekörper 1 um einen Betrag L zurückversetzt, so dass die Abstützfläche 13 des Sensorteiles 3 in Höhe der untersten Gewindegänge 11 des Montagekörpers 1 zu liegen kommt. Zu diesem Zweck ist in den Montagekörper 1 unter Bildung einer rohrförmigen Umfangswand 15 eine Aussparung 10 eingebracht, in die sich ein rohrförmiger Verlängerungsbereich 18 des Sensorteiles 3, wie dargestellt, hineinerstreckt. Zwischen der Aussenumfangsfläche des rohrförmigen Verlängerungsbereiches 18 des Sensorteiles 3 und der Innenumfangsfläche der Aussparung 10 im Montagekörper 1 verbleibt der Ringspalt 14, dessen Breite S im Bereich von etwa 0,01 bis 0,1 mm liegen kann. Wie bei 19 angedeutet, kann der rohrförmige Verlängerungsbereich 18 des Sensorteiles 3 durch eine Ringbuckel-Stumpfschweissung mit dem Boden der Aussparung 10 fest verbunden sein.

Die Abdichtung des Aufnehmers gegenüber der Montagebohrung erfolgt erfindungsgemäss durch anliegende Eingriffnahme der ringförmigen Stirnfläche 16 an der Umfangswand 15 des Montagekörpers mit der Absatzfläche 2 der Montagebohrung. Die Kraftflusslinien K werden durch diese Massnahme toroidförmig um den Sensorteil 3 herum direkt in die Schulterabdichtungsfläche 16 eingeleitet.Durch das Vorsehen des isolierenden Ringspaltes 14 ist auch bei irgendwelchen Deformationen der rohrförmigen, die Aussparung 10 definierenden Wand 15 des Montagekörpers 1 keine direkte Kraftübertragung auf den Sensorteil 3 möglich, so dass dieser unbeeinflusst von den sich ändernden Bedingungen der Kraftflusslinien, d.h. den vorherrschenden Anzugsdrehmomenten, bleibt.

Die durch die Dichtkraft erzeugten Kraftflusslinien verlaufen in unmittelbarer Nähe der geometrischen Verbindungslinie von den tragenden Gewindegängen des Gewindes 11 zur Dichtschulter 2. Es ist das wesentliche Merkmal der erfindungsgemässen Konstruktion,dass diese Linie nicht über Partien des Sensorteils 3 führt, wie dies bei Fig. 1 der Fall ist. Es ergeben sich damit optimale Ankoppelungsverhältnisse des Sensorteils 3 an den Montagekörper 1. Der Ringspalt 14 ist gegen das Druckmedium geöffnet, wodurch erreicht wird, dass in der ganzen Umgebung des Sensorteils 3 ein definierter Druck, nämlich der Messdruck, herrscht. Es ist nicht zu vermeiden, dass der Umgebungsdruck am Sensorteil 3 einen gewissen Einfluss auf letzteren ausübt. Da aber diese Druckeinwirkung gut linear mit dem Messdruck zusammenhängt, bedeutet dies nur eine kleine Veränderung des Kalibrationsfaktors, die jedoch ganz automatisch bei der Kalibration des Wandlers mit berücksichtigt wird. Die Einwirkung des Messdruckes in dem Spalt 14 hat auch noch zur Folge, dass der Montagekörper im Bereich der Aussparung 10 aufgeweitet wird und das Spiel im Gewinde 11 aufhebt. Dies bedeutet eine bessere Reproduzierbarkeit des Sitzes des Wandlers im Druckbehälter. Zwecks Abschirmung gegen thermische Ueberlastung kann die Membranpartie 5 mit auswechselbaren Thermoschutz-Einsätzen 17 geschützt werden. Solche Einsatzplatten sind in der CH-PS 446 761 erwähnt. Durch geeignete Gestaltung der Membranpartie mittels konzentrischen Einstichen, wie z.B. in der CH-PS 587 478 beschrieben, lassen sich druckelastische und trotzdem sehr stabile Membrankonstruktionen erreichen.

Fig. 3 zeigt eine Modifikation des Aufnehmers nach Fig. 2. Diese zeichnet sich dadurch aus, dass der Sensorteil 3 einen oberen rohrförmigen Ansatzbereich 21 aufweist, der durch Schrumpf- oder Pressitz in einer entsprechend bemessenen Bohrung im Montagekörper 1 gehalten ist. Eine weitere Modifikation der Verbindung des Sensorteiles 3 mit dem Montagekörper 1 ist in Fig. 4 gezeigt, wonach an der rohrförmigen Verlängerung 18 des Sensorteiles 3 zusätzlich ein oberer Gewindeansatz 22 ausgebildet ist, der in eine entsprechende Gewindebohrung im Montagekörper zur Befestigung des Sensorteiles 3 eingeschraubt werden kann. Es versteht sich, dass die Erfindung nicht auf die dargestellten und beschriebenen Befestigungsarten des Sensorteiles 3 am Montagekörper 1 beschränkt ist, sondern auch andere Verbindungen vorgesehen werden können, die sich anhand der gegebenen Lehre dem Fachmann anbieten.

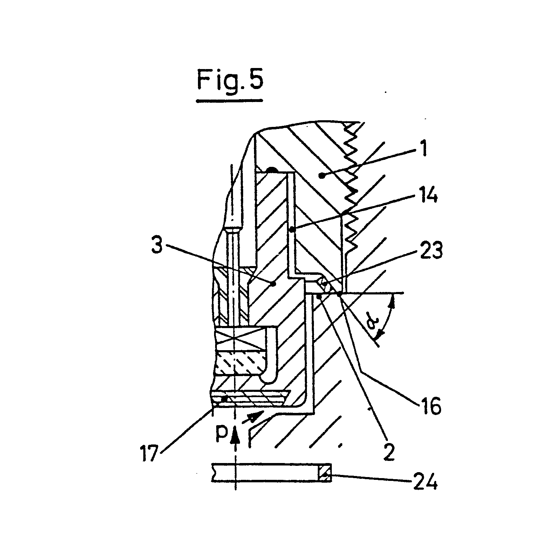

Fig. 5 zeigt in Teilansicht einen modifizierten Hochdruckaufnehmer nach der Erfindung mit Schulterdichtung. Anstelle der in Fig. 2 gezeigten flachen Dichtfläche des Montagekörpers 1 ist hier eine solche mit einem dachförmigen Einstich vorgesehen, der eine Konusfläche bildet, die unter einem geeigneten Winkel α gegenüber der

durch die Absatzfläche 2 der Montagebohrung definierten Ebene liegt. Mit dieser Konusfläche kommt beim Einbau des Aufnehmers ein Metalldichtring 23 in Eingriff, der im Detail in der DE-PS 17 75 646 beschrieben ist. Vor dem Einbau handelt es sich bei dem Metalldichtring 23 um einen Rohrabschnitt 24, vgl. Fig.5 unten, der durch elastische Verformung während des Einbaus die in Fig. 5 gezeigte Verformung während des Einbaues die in Fig. 5 gezeigte Konfiguration annimmt und eine einwandfreie Abdichtung auch bei sehr kleinen Anzugsmomenten ergibt.

Das erfindungsgemässe Vorsehen eines Isolierringspaltes 14 zwischen den Spanneinrichtungen und Sensorteilen bewirkt eine einwandfreie Trennung der Kraftflusslinien K, hervorgerufen durch die Einspann- und Dichtkräfte, vom Sensorteil 3. Erfindungsgemäss werden damit Hochdruckaufnehmer geschaffen, die unabhängig von immer wieder wechselnden Einbaubedingungen genaue, unverfälschte Messresultate ergeben.

Es versteht sich, dass die Erfindung anhand der gegebenen Lehre ohne Abweichung von ihrem Schutzbereich abgeändert und modifiziert werden kann. So können z.B. anstelle der bevorzugten Verwendung von Piezokristallen als Sensorelement auch Widerstandsmesselemente, wie Dehnungsmeßstreifen, oder piezoresistive Sensoren vorgesehen werden.

**Patentansprüche**

1. Hochdruckaufnehmer mit einem Montagekörper (1) zur Befestigung in einer Montagebohrung (4) in einem zu untersuchenden Bauteil, einem mit dem Montagekörper verbundenen Sensorteil (3) mit einer Membranpartie (5) zur Beaufschlagung eines Sensorelementes (8) und einer Einrichtung zur Schaffung einer Abdichtung zwischen Aufnehmer und Montagebohrung, gekennzeichnet durch einen zwischen Sensorteil (3) und Montagekörper (1) vorgesehenen und gegen ein zu untersuchendes Druckmedium offenen Ringspalt (14), der derart ausgebildet ist, daß er die bei der Abdichtung des Aufnehemers durch die Dichtkräfte entstehenden Kraftflusslinien (K) im wesentlichen von dem Sensorteil fernhält.

2. Aufnehmer nach Anspruch 1, dadurch gekennzeichnet, dass der Ringspalt (14) zwischen einem Umfangswandbereich (15) am Montagekörper (1) und dem Sensorteil (3) bzw. einer daran angeformten Verlängerung (18) vorgesehen ist und eine solche Spaltdicke (S) hat, dass elastische Verbiegungen des Umfangswandbereiches des Montagekörpers keine Kraftübertragung auf das Sensorteil (3) bewirken.

3. Aufnehmer nach Anspruch 1 oder 2, dadurch gekennzeichnet, dass eine Anlagefläche (13) des Sensorteils (3) am Montagekörper (1) um ein Mass (L) gegenüber der Schulterdichfläche (16) des Montagekörpers beabstandet bzw. zurückversetzt ist, das mindestens so gross ist, dass die Anlagefläche (13) wenigstens in Höhe der ersten tragenden Gewindegänge eines am Montagekörper vorgesehenen Gewindes (11) liegt.

4. Aufnehmer nach Anspruch 1, 2 oder 3, dadurch gekennzeichnet, dass der Sensorteil (3) mittels Ringbuckel- oder Stumpfschweissung (19) an dem Montagekörper (1) befestigt ist.

5. Aufnehmer nach Ansprüchen 1, 2, 3 und 4, dadurch gekennzeichnet, dass die geometrische Verbindungslinie, welche von den tragenden Gewindegängen in die Schulter-Dichtfläche (2) der Montagebohrung (4) führt, den Sensorteil (3) nicht durchqueren.

6. Aufnehmer nach einem der vorhergehenden Ansprüche, dadurch gekennzeichnet, dass der Sensorteil (3) über einen Gewindeansatz (22) am Montagekörper (1) befestigt ist.

7. Aufnehmer nach einem der Ansprüch 1 bis 4, dadurch gekennzeichnet, dass der Sensorteil (3) durch Schrumpf-Pressitz (21) am Montagekörper (1) befestigt ist.

8. Aufnehmer nach einem der vorhergehenden Ansprüche, dadurch gekennzeichnet, dass die Schulterdichtfläche (16) des Montagekörpers (1) einen konischen Einstich zur Aufnahme eines Metalldichtringes (23) aufweist.

**Claims**

1. High-pressure transducer comprising a mounting body (1) for securing in a mounting bore (4) of a component to be tested, a sensor portion (3) connected to the mounting body and having a diaphragm part (5) for actuating a sensor element (8), and means for providing a seal between the transducer and the mounting bore, characterized by an annular gap (14) provided between the sensor portion (3) and the mounting body (1), said gap being open towards a pressure medium to be tested and formed such that it keeps the flow lines (K) of forces caused by the sealing forces for sealing the transducer substantially remote from the sensor portion.

2. The transducer according to claim 1, characterized in that the annular gap (14) is provided between a peripheral wall portion (15) of the mounting body (1) and the sensor portion (3) or an extension (18) formed thereon, which gap has such a width (S) that resilient deformations of the peripheral wall portion of the mounting body cause no transfer of forces to the sensor portion.

3. The transducer according to claim 1 or 2, characterized in that a bearing surface (13) of the sensor portion (3) of the mounting body (1) is spaced or rearwardly offset from the shoulder sealing face (16) of the mounting body by an amount (L) having at least such a value that the bearing surface (13) is at least at the level of the first supporting courses of a thread (11) provided on the mounting body.

4. The transducer according to claim 1, 2 or 3, characterized in that the sensor portion (3) is secured to the mounting body (1) by means of an annular projection or butt welding (19).

5. The transducer according to claims 1, 2, 3 and 4, characterized in that the geometric connection line leading from said supporting thread courses to the shoulder sealing face (2) of the mounting body (4) does not pass through the sensor portion (3).

6. The transducer according to one of the preceding claims, characterized in that the sensor portion (3) is secured to the mounting body (1) through a threaded extension (22).

7. The transducer according to one of the claims 1 to 4, characterized in that the sensor portion (3) is secured to the mounting body (1) by means of a shrink-press fit (21).

8. The transducer according to one of the preceding claims, characterized in that the shoulder sealing face (16) of the mounting body (1) has a conical recess for receiving a sealing ring (23) made of metal.

**Revendications**

1. Detecteur à haute pression comportant un corps de montage (1) destiné à la fixation dans un orifice alésé de montage (4) d'un élément sujet au contrôle de pression, un élément de détection (3) relié avec le corps de montage et possédant une partie membrane (5) agissant sur un capteur (8), ainsi qu'un arrangement assurant le montage étanche du détecteur au sein de l'orifice alésé de montage, caractérisé en se qu'il est prévu entre l'élément de détection (3) et le corps de montage (1),et en communication avec un milieu de pression à contrôler, un passage annulaire (14) formé de telle sorte qu'il maintient substantiellement à l'écart de l'élément de détection les lignes fonctionnelles de force (K) générées par le couple de serrage lors du montage étanche du détecteur.

2. Détecteur suivant la revendication 1, caractérisé en ce que le passage annulaire (14) est prévu entre une paroi périphérique (15) du corps de montage (1) et un prolongement (18) de l'élément de détection (3) et possède une largeur (S) telle que les déformations élastiques de la zone de la paroi périphérique du corps de montage n'exercent aucune contrainte sur l'élément de détection (3).

3. Détecteur suivant la revendication 1 ou 2, caractérisé en ce qu'il se trouve déplacé vers l'arrière, d'une valeur (L) par rapport à l'épaulement d'étanchéité (16) du corps de montage (1), une face d'appui (13) de l'élément de détection (3), laquelle est suffisamment grande que pour venir se positionner à hauteur de la première spire portante d'un filetage (11) prévu au corps de montage (1).

4. Détecteur suivant la revendication 1, 2 ou 3, caractérisé en ce que l'élément de détection (3) est fixé au corps de montage (1) par bossage annulaire ou soudage en bout (19).

5. Détecteur suivant les revendications 1, 2, 3 et 4, caractérisé en ce que la ligne de jonction géométrique, laquelle se trouve aux spires portantes du filetage vers l'épaulement d'étanchéité (2), ne traversepas l'élément de détection (3).

6. Détecteur suivant une des revendications qui précèdent, caractérisé en ce que l'élément de détection (3) est fixé au corpsde montage (1) au moyen d'un prolongement fileté (22).

7. Détecteur suivant une des revendications 1 à 4, caractérisé en ce que l'élément de détection (3) est fixé au corps de montage (1) par ajustement fretté ou ajustage serré (21).

8. Détecteur suivant une des revendications qui précèdent, caractérisé en ce que l'épaulement d'étanchéité (16) du corps de montage (1) présente une entaille conique destinée à recevoir une bague d'étanchéité en métal (23).

Fig. 1

Fig. 2

Fig. 3

Fig. 4

## Fig.5